# EUROPEAN PATENT APPLICATION

(11) **EP 3 354 522 A1**
(43) Date of publication of application: **01.08.2018**
(21) Application number: 18153260.7
(22) Date of filing: 24.01.2018
(51) Int. Cl.: B60R 25/25

(54) **IMMOBILIZER FOR A TWO-WHEELED VEHICLE**

(30) Priority: 25.01.2017 IN 201741002789
(71) Applicant: TVS Motor Company Limited, Chennai 600006 (IN)
(72) Inventor: NILUGAL, Abhishek Ashok, 600 006 Chennai (IN); SIVAKUMAR, Arumugham, 600 006 Chennai (IN)
(74) Representative: Patentanwaltskanzlei Matschnig & Forsthuber OG

(57) **Abstract**

The present invention provides a Biometrics based immobilizer system which is integrated with Transistor Controlled Ignition (TCI) of a two-wheeled vehicle. Enrolment of a new fingerprint is facilitated by means of sequential operation of switches available in the two-wheeled vehicle. Switch 1 and switch 2 are operated in specified sequence to switch the system to learning mode. The sensor then captures fingerprint image (**1**) and stores the fingerprint pattern. The stored pattern is used to validate captured image by comparison (**5**) and thus authenticate the rider. The system is designed predominantly to suit two-wheeler automotive environment, and the adaptations penetrate both mechanical as well as electrical aspects. This system shall be used in motorcycles, scooters, and mopeds where the rider has most of the controls within an arm's length.

## Description

### TECHNICAL FIELD

The present subject matter relates generally to a two-wheeled vehicle. More particularly but not exclusively the present subject matter relates to a Biometrics based immobilizer which is integrated with Transistor Controlled Ignition (TCI) of said two-wheeled vehicle.

### BACKGROUND

Vehicles are means of livelihood for a number of families in developing nations like India. Mopeds and motorcycles are found in every grocery shop for transporting items from the local market. Milk vendors use motorcycles to distribute milk by hanging the cans along the carrier. The vehicles while playing such a significant role, the loss of which will be considered equivalent to a loss of livelihood for such families. Thus, securing the vehicles using anti-theft devices becomes vital. Existing technologies attempt to elude theft by authenticating electronic devices in possession of the rider. Though they are effective to an extent, they can still be subverted, and the vehicles can be stolen.

India witnessed a total of 1,54,351 auto-theft cases in 2012. This converts to a massive 45.75% of total registered thefts cases (3,37,407) [1] in that year. Figures demonstrate the fact that a number of vehicles are still prone to auto theft crimes and continuous efforts are required towards making them more secure. Most of the vehicles, having been secured with a simple ignition lock and key which are prone to hotwiring. Wires emanating from terminals of ignition lock can be short with ease, and the vehicle can be started without the use of an ignition key. A number of tutorials on the internet teach methods to hotwire any vehicle which exposes great threat if no anti-theft devices are used.

Traditional security devices such as passive and active immobilizers have significantly combated auto theft and plummeted crime rates post 1991. However, the fundamental philosophy behind such systems makes them weak and vulnerable. The systems tend to authenticate an electronic device in possession of the rider and not the rider himself. This loophole can be exploited, and vehicles can be stolen with ease by possessing the key.

Augmenting aforementioned flaw, a number of low-cost receivers operating at 433MHz can be used to tap the data transmitted by key-fob. It can then be replicated with the help of low-cost 433MHz transmitters thus mobilizing the vehicle. Case studies by Stephen Mason reveal the methods commonly used by thieves to bypass Remote Keyless Entry technology. Apparently, security devices built on Radio Frequency technology are not entirely foolproof and can be breached to gain access to the vehicle. Africa has one of the biggest two-wheeler markets in the world. Two-wheeler, in African countries is an affordable mode of transportation. In fact many people are increasingly switching from other modes of transportation to two-wheelers. With the kind of given infrastructure in African countries travelling is not easy on unmaintained roads. Therefore, travelling on two-wheeler is much more convenient that travelling in a four wheeler.

A biometrics-based immobilizer has been demonstrated in DE19900032 to overcome aforementioned issues. Biometrics is unique traits of human beings and has been popularly used for criminal investigations. Its unique nature facilitates user authentication by juxtaposing stored and presented physical trait rather than authenticating an electronic ID built on flawed philosophy. The system uses a fingerprint sensor integrated in a movable over a guide start button. The image captured using fingerprint sensor is compared with the stored image. If the two images match, a number of personalization functions such as seat and mirror adjustment, radio preset, etc., are performed. Failure of authentication triggers yet another set of functions involving immobilization of vehicle that includes, the locking of a steering wheel and commanding engine not to start.

EP 1293403A2 titled "*Starting system for an automotive vehicle using fingerprint recognition"* discloses a starting system for an automotive vehicle's engine having an ignition system. The starting system includes a fingerprint sensor (26) to generate a fingerprint signal, a memory that has more than one authorized fingerprint signals stored, a switch (28) that generates a start signal, a controller that is connected to the ignition system (20),), the fingerprint sensor (26), the memory (18), and switch (28). The fingerprint signal is compared with the authorized fingerprint signal stored in the memory by the controller. In response to the start signal, the controller allows the ignition system and the fingerprint signal being substantially equal to an authorized fingerprint signal.

DE 19900032 A titled "Arrangement for authorization interrogation in a motor vehicle has fingerprint sensor that detects user fingerprint for checking authorization integrated into starting button movable in guide" discloses an arrangement that includes a fingerprint sensor (10) for detecting a fingerprint of the user for authorization check, that is integrated into a starting button (12) that can be moved in a guide (14) and has an aperture for a locking device. Also included is an independent claim for a method that operates an arrangement for authorization interrogation in a motor vehicle.

US 2014/0002237 A1 titled *"Apparatus and Method for Vehicle Operation Using Biometric Fingerprint identification"* discloses a fingerprint authentication system that benefits from securing the vehicles. The system comprises a wireless handheld programmer used for the easy setup and configuration of a multifactor security authentication console that includes multicolor LED indicator lights. Programming and user interface feedback are issued with the lights by universal symbols. The system is electrically coupled to a vehicle by a relay that allows the vehicle on/off function to be controlled. Once the authentication of the operator's identity is done, the device allows operation of the vehicle. To allow a single user, a valet mode is provided wherein the unit can be deactivated or programmed. As the swipe device, a sensor module operates that allows the inconspicuous placement on any vehicle.

DE 102005044473 A1 titled *"An identification system and combined analysis unit comprises using biometric data to provide identification and health analysis of a driver in a road vehicle* " discloses an identification system that is connected to an analysis system that uses biometric information generated by an iris scanner or fingerprint scanner, also apart from identification, the system uses a blood sample or hair sample to provide a health test.

US 2003/0002716 A1 titled *"GOD fingerprint operated ignition switch and entry system"* discloses a fingerprint entry and engine starting system comprising a computerized video recorder, and transmitter that is installed in a driver's door of a vehicle that houses a transparent shield and the recorder is perpendicular via the position under the transparent shield. To start the vehicle's engine, a legal user will have to press the shield upon its left side portion, as the shield is installed in the vehicle's door handle. The vehicle's door-locks are freed whenever the right-hand portion of the shield is pushed by a legal user which is done when the recorder is actuated whereas when the shield is pressed a user's fingerprint is transformed from optical information to computer data which is transmitted and compared with the preset data. The coils via actuators for releasing the vehicle's door-locks are actuated when the preset data stored in a memory matches with transformed data. As a match is defined, an ignition switch actuates a motor of an engine starter also, which drives the starter and starts the engine of the vehicle, which is done when an activating signal is outputted from a CPU. Whenever a legal user pushes the shield for actuating two pushbutton switches, the CPU defines the memory whereby outputting the activating signal only. Before entering the vehicle without a key, one power window, a heater, a trunk and a hood are operated by the four fingerprint input pushbutton switches outwardly upon the door.

US 2005/0184855 A1 titled *"Fingerprint vehicle access system"* discloses device and method using a fingerprint sensor to detect persons having rights of entry for accessing a vehicle having electrically or electronically activated door locks. The device comprises means to selectively open doors, trunks, etc., using different fingers. The system is used with an existing access control and alarm system.

GB 2388694A titled *"Vehicle personalisation via biometric identification"* discloses a sensor module that is mounted in a vehicle, which acquires an image of the vehicle occupant' finger to identify the vehicle occupant.

US 7228213 B2 titled *"Vehicle environment control device"* discloses vehicle environment control device to identify and control the state of the vehicle-associated equipment and a vehicle environment that comprises a personal data storage section that stores the user's data related with vehicle M's users. Also, there is a fingerprint information storage section that stores information about fingerprints of the authorized users. There is a section for user recognition based on the fingerprint information. Also a section is there for reading the personal data of the identified user such as a physique from the personal data storage section and for improving the convenience of a driver or occupants in using a vehicle, there is a section for setting the vehicle M to be an environment appropriate for the user (such as setting a seat position) based on the personal read data.

US 9272689 B2 titled *"System and method for biometric identification in a vehicle"* discloses a computer-implemented method that identifies a vehicle occupant which receives a signal from more than one sensor. The signal shows a measurement of cardiac activity that determines a biomarker based on the biometric features of the signal and based on this biomarker identifies the vehicle occupant.

WO 2013/188827 A1 titled *"Apparatus and method for vehicle operation using biometric fingerprint identification"* disclose a fingerprint authentication system that benefits in securing the vehicles. The system comprises a wireless handheld programmer used for the easy setup and configuration of a multifactor security authentication console that includes multicolor LED indicator lights. Programming and user interface feedback are issued with the lights by universal symbols. The system is electrically coupled to a vehicle by a relay that allows the vehicle on/off function to be controlled. Once the authentication of the operator's identity is done, the device allows operation of the vehicle. To allow a single user, a valet mode is provided wherein the unit can be deactivated or programmed. A sensor module operates as the swipe device, allowing for the inconspicuous placement on any vehicle.

In the present invention, some improvements have been made to the one presented in DE19900032. The system is modified predominantly to suit the two-wheeler automotive environment. These modifications penetrate both mechanical as well as electrical aspects of the system.

### BRIEF DESCRIPTION OF THE DRAWINGS

Figure 1 illustrates a functional block diagram of an authentication system.
Figure 2 illustrates a flowchart for enrolment process.
Figure 3 illustrates an enclosure for a sensor with a sliding mechanism.
Figures 4 and 5 illustrate the vehicle top view from the rear side showing the immobilizer of the present invention.

### DETAILED DESCRIPTION

This invention provides a two-wheeled vehicle and a method for enrolling and authenticating a fingerprint of a user of a two-wheeled vehicle as described in the independent claims. The below-described embodiments are meant as illustrative examples which are not restrictive for the invention. Embodiments of the invention include a Biometrics based immobilizer system which is integrated with Transistor Controlled Ignition (TCI) of a vehicle. Enrolment of a new fingerprint is facilitated by means of sequential operation of switches available in the vehicle. Switches are operated in specified sequence to switch the system to learning mode. The sensor then captures fingerprint image and stores the fingerprint pattern. The stored pattern is used to validate captured image by comparison and thus authenticate the rider.

The system consists of three main components, Fingerprint Sensor, Image processor, and Control or Base module. The Fingerprint Sensor captures fingerprint image and sends it to an image processor. The image processor enhances the captured image and runs fingerprint detection algorithms. The captured image is compared with stored templates, and if matching score exceeds a threshold which is set by means of False Acceptance Rate (FAR) and False Rejection Rate (FRR), the image processor communicates the event to a base controller. The network associated with the image processor is either housed in the sensor enclosure or merged with a base module in TCI.

The Control or Base Module consists of a control unit that governs the system. Inputs to the module stem from switches used for enrollment, clutch switch (In motorcycles), brake switch, speed sensor and image processor. The authentication process begins with the application of clutch switch or brake switch. If the vehicle is at a standstill, the controller commands the sensor to capture fingerprint and juxtapose the same with the stored template. If the fingerprint matches, starter relay is energized thus cranking the engine by means of electric start. If the rider decides to start the vehicle by means of a kickstart, the authentication process is carried post cranking period. The vehicle comes to a standstill in few meters for a negative identity of a rider as revealed during authentication. The vehicle in the present subject matter is a two-wheeled vehicle.

Network associated with the control circuit is integrated with TCI unit. All the cables associated with tangible components of a system are used for communication and none to power electrical loads. Shorting any two cables therefore paralyzes the system and plays no role in cranking the engine and thus, enhances the security of the vehicle. The drawback of hotwiring associated with ignition key is eliminated.

The sensor being exposed to atmosphere is prone to adverse environmental conditions such as extreme temperatures, rain, extreme humidity, varying pressure due to altitude variation, etc. The Fingerprint Sensor is protected by means of an enclosure that consists of fixed and moving entities. The fixed entity is a solid frame with provision to support a sliding shutter which is a moving element with two positions. A default position is when no force is applied to the sliding shutter, and a small force application moves the sliding shutter to a second position, exposing the enclosed sensor. The rider can conveniently place his finger over the sensor to be authenticated. On relaxing the applied force, the sliding shutter moves back to default position.

In addition to authentication, control module also governs fingerprint enrollment. The sensor can be placed at any place reachable by the rider while seated on rider's seat. This includes handlebar, handlebar grips, Left Hand (LH) or Right Hand (RH) control assembly, LH or RH levers, instrument cluster, and petrol tank. The position shall be convenient for the rider to reach without bending his back or moving his hand beyond the zone of minimal fatigue.

The communication between control circuit associated with authentication system and TCI or Electronic Control Unit (ECU) forms a weak link in an immobilizer system. Given if the two are operated independently, a communication channel between the two might be composed of a single wire communicating a digital high or digital low. This link can be tampered to bypass authentication, and the vehicle can be mobilized. To eliminate this weak link, the two units are clubbed into a single entity forming a combined TCI and Immobilizer system. A single Printed Circuit Board (PCB) encompassing two systems is enclosed in a potted cuboid thus, concealing the communication link and securing the weak point.

Aforementioned innovation is augmented with the enrolment of a fingerprint using fingerprint sensors in Smartphones. Smartphone, interfaced with the vehicle by means of Bluetooth, Near-field communication (NFC), Wi-Fi, etc., is used to enroll the fingerprint through an app. The captured image is transmitted over a secured communication channel to a fingerprint sensor in the vehicle. The owner can also permit guest access to the vehicle by limiting validity period of the enrolled fingerprint.

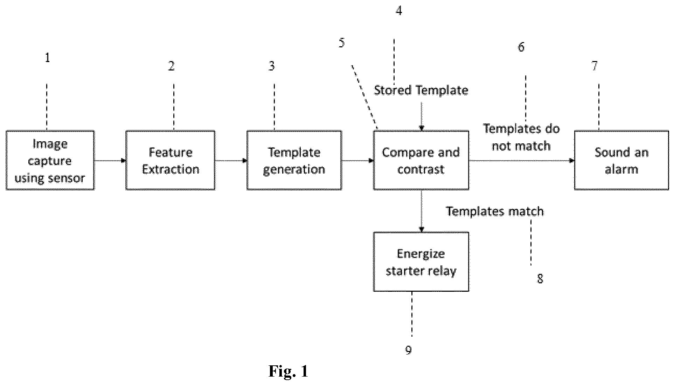

Fig. 1 shows the functional block diagram of the authentication system of present subject matter. The Fingerprint image is captured using Fingerprint Sensor (1). The image is then communicated to a processor through an analog channel. Fingerprint features such as minutiae, ridges, valleys, delta, etc. are extracted (2) from the image with the help of fingerprint detection algorithm. A template is then generated (3) using these features which are further compared (5) with a stored template of the user (4). If the two match (8), TCI is alerted of the event which in turn energizes starter relay (9). If authentication reveals negative identity (6), the vehicle is immobilized by sending a relevant signal to TCI. In addition to that, a buzzer is energized to sound an alarm (7) thus alerting the owner on theft attempt.

The fingerprint authentication system consists of three main components:
1. Fingerprint Sensor
2. Image processor
3. Control or Base module

### Fingerprint Sensor:

The fingerprint Sensor captures fingerprint image and sends it across to an image processor. The technology used to capture image can be any of the following: Optical, Capacitive, Thermal, Pressure or Acoustic. Use of different sensing technologies varies with respect to the application. The system can use any of the available sensing technologies based on the degree of sensitivity required.

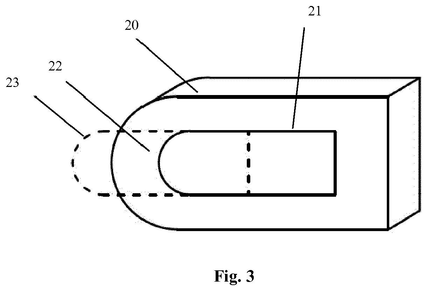

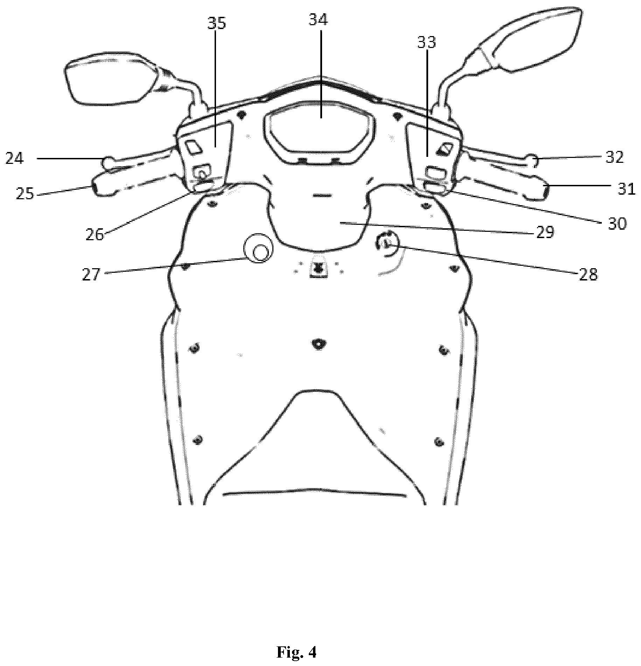

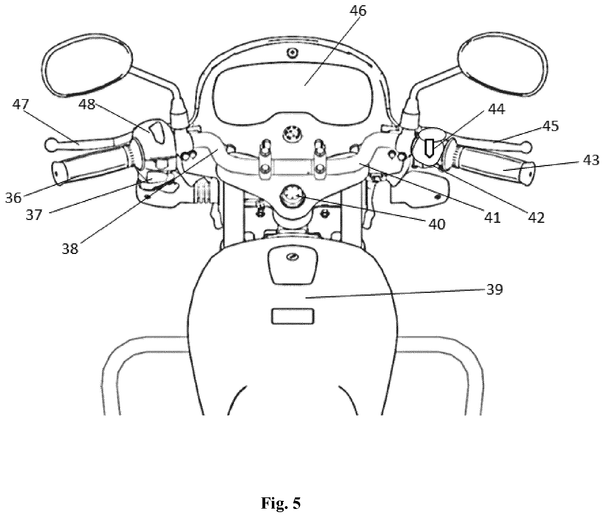

The sensor is exposed to the atmosphere is prone to adverse environmental conditions such as extreme temperatures, rain, extreme humidity, varying pressure due to altitude variation, etc. The sensor is protected by means of an enclosure as shown in Fig. 3. The enclosure consists of fixed and moving entities. Fixed entity (20) is composed of a solid frame with provision to support a sliding shutter (21) which is a moving element with two positions. It is held in first or default position (22) when no force is applied to the sliding shutter (21). On application of small force, the sliding shutter (21) moves towards the second position (23) exposing the enclosed sensor. The rider can then conveniently place his finger over the sensor to be authenticated. On relaxing the applied force, the sliding shutter (21) moves back to the default position (22). The entity consisting of the sensor and is mounted on one of the following positions: Left Hand (LH) or Right Hand (RH) control assembly (26, 30, 33, 35, 37, 42, 44, 48), LH / RH levers (24, 32, 45, 47), Handlebar (38, 41), Handlebar grips (25, 31, 36, 43), Instrument Cluster (34, 46), Petrol tank (39) or other positions reachable with minimal fatigue (27, 28, 29, 40). Figures 4 and 5 show the immobilizer disposed of in the speedometer area of the vehicle, in the top view from the rear side.

### Image Processor:

The image processor is used to enhance the captured image and run fingerprint detection algorithms. The image processor, depending upon available memory, stores fingerprint templates (4). Based on the number of fingerprints to be stored the processor with relevant memory or a processor with relevant external memory will be chosen, and will be decided by the manufacturer (depending on the number of users the manufacturer gives access to the vehicle). These templates are used as a source of comparison (5) for captured images. The image processor generates matching score (8) based on the degree of match between the stored and captured image fingerprint pattern. If the score exceeds a threshold which is set by means of False Acceptance Rate (FAR) and False Rejection Rate (FRR), the image processor communicates the event to a base controller.

The network associated with the image processor is either housed in the sensor enclosure or merged with a base module in TCI.

### Control or Base Module:

Control or Base Module consists of the control unit that governs the system. Inputs to the module stem from switches used for enrollment, clutch switch (In motorcycles), brake switch, speed sensor and image processor. The authentication process begins with an application of clutch switch or brake switch. If the vehicle is at standstill, the controller commands the sensor to capture fingerprint and juxtapose the same with the stored template. If the fingerprint matches, starter relay (10) is energized thus cranking the engine by means of electric start (20).

If the rider decides to start the vehicle by means of a kickstart, the authentication process is carried post cranking period. The vehicle comes to a standstill in few meters for a negative identity of the rider as revealed during the authentication process.

The network associated with the control circuit is integrated with TCI unit. All the cables associated with tangible components of the system are used for communication and none to power electrical loads. Shorting any two cables, therefore, paralyzes the system and plays no role in cranking the engine thus enhancing the security of the vehicle. The drawback of hotwiring associated with ignition key is eliminated.

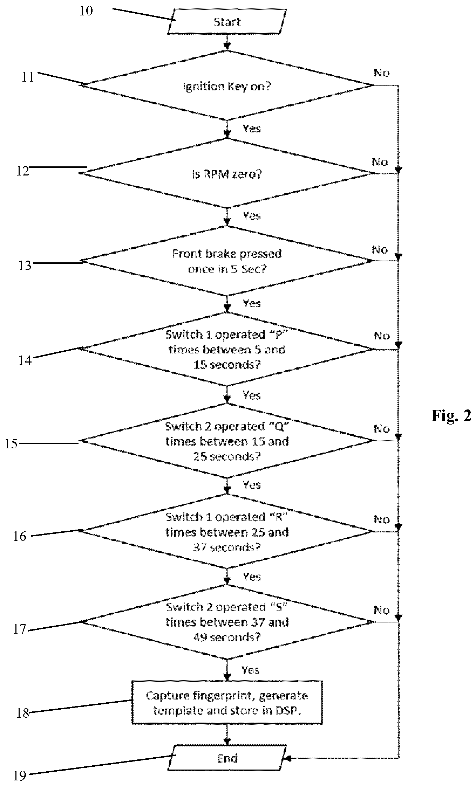

In addition to authentication, the control module also governs fingerprint enrollment. A sequence of switch operation shown in Figure 2 is followed to enroll a new fingerprint. The template is either stored in the image sensor or an external memory. The number of enrolments is limited by the controller to a minimal value to preserve the security. Further enrollment of fingerprint overwrites enrolled templates after issuing a warning to the rider.

An enrolment process is used to enroll new fingerprints. In the absence of mobile-phone, this can be performed by following a sequence of switch operation as shown in Fig. 2. The enrolment process starts (10) by turning on ignition key (11) if the Revolutions per Minute (RPM) are zero (12), front brake of the vehicle must be operated once in first five seconds (13). Switch 1 must be operated "P" times in subsequent ten seconds (14) and switch 2 "Q" times between fifteen and twenty-five seconds (15). Following that, switch 1 must be operated "R" times between twenty-five to thirty-seven seconds (16) and switch 2 "S" times between thirty-seven and forty-nine seconds (17). The sensor will capture new fingerprint at Fiftieth second and use for authentication (18), and the enrolment process ends (19). Count P, Q, R, and S will be decided by the manufacturer.

Success in authentication process is indicated by a constant glow of green LED incorporated in the instrument cluster or the sensor casing. Failure of authentication is indicated by an indicator by constant glowing of red LED in the instrument cluster or sensor casing. Similarly, a success of enrollment is indicated by blinking green LEDs and failure by blinking red LEDs.

The system is further interfaced to Bluetooth, Wi-Fi or GSM connected in the vehicle. A database of owner details and enrolled members can be accessed through an authorized application built for Smartphones. The application allows the owner to enroll new fingerprints using fingerprint enabled Smartphones. Also, provision to delete existing templates in image processor or the memory for the ceasing of guest access to the vehicle by the owner is available.

The fingerprint authentication system is popularly used to authenticate presence of employees/operators in time bound environments. The system recognizes and automatically logs entry and exit time of employees. Based on the time log, hourly wages are disbursed to employees. With a slight modification, these systems are also used in educational institutions to log the presence of students in classes.

With the advent of Smartphones, Fingerprint Sensors are now used as a popular option to unlock the phone. They are also used to authenticate bank transactions and app installations. The popularity stems from its ease of use and reliability that sensors offer. The uniqueness of fingerprints has made generations believe in its security.

Biometrics based immobilizer, following the leads of other industries, is designed to authenticate rider before he can crank the vehicle. The system adds a security layer to vehicles preventing undesired access to it. This system shall be used in motorcycles, scooters, and mopeds where the rider has most of the controls within reach of his fingers. The system shall be used to authenticate the rider either to start the bike or scooter or moped or for the sake of validation when requested by any ECUs in the vehicle.

Fingerprint Sensor can be substituted by sensors for other biometric traits such as retina scanner, voice recognition unit, etc. With modification to sensor position, various biometric traits can be exploited to authenticate the rider.

Many modifications and variations of the present subject matter are possible in the light of above disclosure. Therefore, within the scope of claims of the present subject matter, the present disclosure may be practiced other than as specifically described.

## Claims

1. A two-wheeled vehicle, said two-wheeled vehicle comprising:
a fingerprint sensor (1), said fingerprint sensor (1) securely housed in a sensor enclosure, said sensor enclosure disposed on any one of a plurality of sensor mounting location on said two-wheeled vehicle, a plurality of switches to receive a plurality of inputs; said plurality of switches connected to a control module, and said control module comprising a control unit integrated with a transistor control ignition system;
wherein
said sensor enclosure comprising a fixed entity (20) and a moving entity, said fixed entity (20) provided with a sliding shutter (21) capable of repositioning from a second position (23) to a default position (22); a communication link between a transistor controlled ignition system and an immobilizer system, and
said transistor controlled ignition system and said immobilizer enclosed in said control module.

2. The two-wheeled vehicle as claimed in claim 1, wherein said fingerprint sensor (1) scans a fingerprint of a user and said finger print sensor is an optical sensor, a capacitive sensor, a thermal sensor, a pressure sensor or an acoustic sensor.

3. The two-wheeled vehicle as claimed in claim 1 or 2, wherein said plurality of sensor mounting location is a left hand assembly(26,30,33,35), a right hand assembly(37,42,44,48), a left hand lever (24,32), a right hand lever (45,47), a pair of handle bar (38,41), a handlebar grip (25,31,36,43), an instrument cluster (34,46) or a petrol tank (39).

4. A method for enrolling and authenticating a fingerprint of a user of a two-wheeled vehicle comprising:
(i) initiating enrolling (10) of said fingerprint of said user by turning on an ignition key (11);
(ii) Operating front brake of the vehicle if the Revolutions Per Minute (RPM) is zero (12), once in first five seconds (13), such that Switch 1 must be operated "P" times in subsequent ten seconds (14) and switch 2 "Q" times between fifteen and twenty-five seconds (15), following, switch 1 must be operated "R" times between twenty-five to thirty-seven seconds (16) and switch 2 "S" times between thirty-seven and forty-nine seconds (17);
(iii)Capturing a fingerprint by said fingerprint sensor (1) and using said fingerprint for authentication (18); and
(iv)Indicating authentication success or failure by an indicator.

5. The method for enrolling and authenticating said fingerprint of said user of said two-wheeled vehicle as claimed in claim 4, wherein said fingerprint is sent to an image processor.

6. The method for enrolling and authenticating said fingerprint of said user of said two-wheeled vehicle as claimed in claim 4 or 5, wherein said indicator is a multicoloured LED provided in an instrument cluster or in said sensor enclosure.

7. The method for enrolling and authenticating said fingerprint of said user of said two-wheeled vehicle as claimed in any one of claims 4 to 6, wherein said image processor enhances said fingerprint and runs fingerprint detection algorithms.

8. The method for enrolling and authenticating said fingerprint of said user of said two-wheeled vehicle as claimed in any one of claim 4 to 7, wherein captured said fingerprint is compared with a stored template, and if matching score exceeds threshold values of a False Acceptance Rate (FAR) and a False Rejection Rate (FRR) and said image processor communicates the event to a base controller.

9. The method for enrolling and authenticating said fingerprint of said user of said two-wheeled vehicle as claimed in any one of claim 4 to 8, wherein said authentication can be before starting said two-wheeled vehicle or after starting said two-wheeled vehicle through kick-start.
